# EUROPÄISCHE PATENTSCHRIFT

(11) **EP 1 554 884 B1**
(45) Veröffentlichungstag und Bekanntmachung des Hinweises auf die Patenterteilung: **29.05.2019**
(21) Anmeldenummer: 03769453.6
(22) Anmeldetag: 24.10.2003
(51) Int. Cl.: H04N 7/24, H04N 5/00

(54) **SCHALTUNGSANORDNUNG UND VERFAHREN ZUM DIGITALEN FERNSEHEMPFANG IN MOBILEN FERNSEHEMPF NGERN**
CIRCUIT ARRANGEMENT AND METHOD FOR DIGITAL TELEVISION RECEPTION IN MOBILE TELEVISION RECEIVERS
ENSEMBLE CIRCUIT ET PROCEDE POUR LA RECEPTION DE SIGNAUX DE TELEVISION NUMERIQUES DANS DES RECEPTEURS DE TELEVISION MOBILE

(30) Priorität: 24.10.2002 DE 10249788
(43) Veröffentlichungstag der Anmeldung: 20.07.2005
(73) Patentinhaber: Harman Becker Automotive Systems GmbH, 76307 Karlsbad (DE)
(72) Erfinder: TEICHNER, Detlef, 78126 Königsfeld (DE); SCHMIDTMANN, Christopher, 78098 Villingen-Schwenningen (DE); WOEHRLE, Philipp, 78098 Triberg (DE)
(74) Vertreter: Grünecker Patent- und Rechtsanwälte PartG mbB
(86) Internationale Anmeldenummer: PCT/EP2003/011850
(87) Internationale Veröffentlichungsnummer: WO 2004/039080

(56) Entgegenhaltungen:
- EP-A- 0 917 355
- WO-A1-01/20824
- DE-A- 10 060 599
- TEICHNER D: "NETZWERK-KONZEPTE FUER VIDEO- UND AUDIOFUNKTIONEN IM AUTO" FERNSEH UND KINOTECHNIK, VDE VERLAG GMBH. BERLIN, DE, Bd. 54, Nr. 3, März 2000 (2000-03), Seiten 119-120,122-124, XP001008815 ISSN: 0015-0142
- SCHOPP H ET AL: "Video and audio applications in vehicles enabled by networked systems" CONSUMER ELECTRONICS, 1999. ICCE. INTERNATIONAL CONFERENCE ON LOS ANGELES, CA, USA 22-24 JUNE 1999, PISCATAWAY, NJ, USA,IEEE, US, 22. Juni 1999 (1999-06-22), Seiten 218-219, XP010346680 ISBN: 0-7803-5123-1

## Beschreibung

Die Erfindung betrifft eine Schaltungsanordnung zum digitalen Fernsehempfang in mobilen Fernsehempfängern gemäß den Merkmalen des Oberbegriffs des Anspruchs 1, ein Verfahren hierfür gemäß den Merkmalen des Anspruchs 19. Mittlerweile sind neben den Empfangsanlagen zum Empfang von analogen Fernsehsignalen ("analoges Fernsehen") auch Empfangsanlagen zum Empfang von digital ausgestrahlten Fernsehsignalen ("digitales Fernsehen") im Einsatz. Die digitalen Empfangsanlagen werden zukünftig noch mehr an Bedeutung gewinnen, weil immer mehr Rundfunkanstalten dazu übergehen, ihre Sendungen digital auszustrahlen. Die gilt nicht nur für Radiosendungen, die zum Teil bereits digital ausgestrahlt werden, sondern zunehmend auch für Fernsehsendungen, die digital ausgestrahlt werden. Pilotprojekte, die digitales Fernsehen ausstrahlen, laufen mittlerweile in Berlin und anderen Städten. Das digitale Fernsehen ist unter der Bezeichnung DVB-T "Digital Video Broadcasting Television" bekannt.

Für den Empfang dieser DVB-T-Signale sind spezielle digitale Empfangsanlagen erforderlich. Die "analogen" Empfangsgeräte sind hierfür nicht geeignet.

Beim analogen Rundfunk, egal ob Radio oder Fernsehen, werden die zu übertragenden Informationen wellenförmig über Funk verbreitet. Die Digitaltechnik verpackt dagegen die Daten als Code aus Nullen und Einsen in Datenpaketen. Beim Empfänger werden diese Datenpakete dann wieder entschlüsselt. Bisher wurden digitales Radio und Fernsehen über Satellit verteilt und dann durch Kabel zum Endkunden weitergeleitet. Mit DVB-T findet nun auch die letzte Übertragung terrestrisch, also "durch die Luft" statt - mittels auf der Erde stehender Sendemasten.

Das Signal wird nach dem Standard für die Digitalisierung von TV-Signalen, MPEG-2 (Motion Pictures Experts Group, 2. Norm), übertragen. DVB transportiert die Informationen in Form von gleichgroßen Datenpaketen nach dem "Container-Konzept". Es können so gleichzeitig Fernsehsignale, Audiosignale und Daten zusammengefasst in einem MPEG-Transportstrom übertragen werden. Da das verfügbare Frequenzspektrum begrenzt ist, werden die Signale vor der Übertragung reduziert und komprimiert, damit die zu übertragende Datenrate möglichst niedrig wird. Beim MPEG-2-Verfahren kann die Datenrate für ein Fernsehprogramm zwischen 2 Mbit/s und 15 Mbit/s gewählt werden.

Für eine dem heutigen analogen PAL-Fernsehsignal gleichwertige Bildqualität werden digital 3-5 Mbit/s benötigt. Die MPEG-Codierung ermöglicht es, auf einem analogen Übertragungskanal (7 bzw. 8 MHz Bandbreite) mehrere Fernsehprogramme und andere Dateninhalte zu senden.

Für DVB-T sind drei Modulationsverfahren festgelegt worden:
QPSK, 16-QAM und 64 QAM. Sie erfüllen gemeinsam mit weiteren wählbaren Systemparametern unterschiedliche Anforderungen an Übertragung und Empfang. So kann zum Beispiel der Schutz gegen Übertragungsfehler unterschiedlich hoch gewählt werden. Durch diese Flexibilität besteht die Möglichkeit, die Anzahl der auszustrahlenden Programme und die Empfangsart zu bestimmen, z. B., ob mobil, portabel mit Stabantenne oder stationär empfangen werden soll. DVB-T-Sender arbeiten bei der Übertragung nach dem COFDM-Verfahren (Coded Orthogonal Frequency Division Multiplex). Das wesentliche Prinzip dieses Verfahrens ist die Verteilung der Information auf viele, dicht nebeneinanderliegende Trägerfrequenzen. Bei Störung einzelner Träger auf dem Übertragungsweg kann mit bestimmten Rechenverfahren Im Empfangsgerät eine Fehlerkorrektur durchgeführt werden, so dass der Zuschauer ein ungestörtes Bild erhält.

WO 01/20824 A1 offenbart ein Multi-Media-Broadcast-System, welches aufweist: eine Datenzusammenstellungs- und Planungseinrichtung, eine Übertragungseinrichtung, ein Empfänger- und Speichermittel zum Empfangen und Speichern von Multimedia-Informationen, ein Zeitplan-Analyse-Mittel zum Applizieren von vorgegebenen Spielplan-Anweisungen, die von der Datenzusammenstellungs- und Planungseinrichtung zur Verfügung gestellt werden und sich auf die Multimedia-Informationen beziehen, und mindestens ein Display.

DE 100 60 599 A1 beschreibt ein System zum Übertragen von Verkehrsinformationen, insbesondere von aktuellen Verkehrsinformationen, mit einem Empfangsmittel zum Empfangen von Verkehrsinformationen von externen Informationsanbietern, einer ersten Datenbank zum Speichern der empfangenen Verkehrsinformationen, einem Steuermittel zum Auswählen von zu übertragenden Verkehrsinformationen aus den in der ersten Datenbank vorhandenen Verkehrsinformationen, einem Informations-Aufbereitungsmittel zum grafischen Aufbereiten der von dem Steuermittel ausgewählten Verkehrsinformationen, einem Codiermittel zum Codieren der aufbereiteten Verkehrsinformationen in ein DVB-T- und/oder ein DAB-Signal, und einem Sendemittel zum Senden des DVB-T- und/oder des DAB-Signals mit den darin codierten Verkehrsinformationen.

TEICHNER D: "NETZWERK-KONZEPTE FUER VIDEO- UND AUDIOFUNKTIONEN IM AUTO",FERNSEH UND KINOTECHNIK, VDE VERLAG GMBH. BERLIN, DE, Bd. 54, Nr. 3, März 2000 (2000-03), Seiten 119-120,122-124, XP001008815,ISSN: 0015-0142 beschreibt ein MOST-Netzwerk in einem Fahrzeug. Ein Fernsehempfänger, ein Display, und eine Bedieneinheit sind am Netzwerk angeschlossen.

Der mobile Fernsehempfang, also z. B. innerhalb von Kraftfahrzeugen, benötigt einen sehr hohen Fehlerschutz, um ein robustes Signal für eine störungsfreie Wiedergabe der digital übertragenen Audio- und Videodaten aber auch der übertragenen "sonstigen Daten" zur Verfügung zu stellen.

Unter "sonstigen Daten" sind dabei solche Informationen gemeint, die weder mit dem am Bildschirm unmittelbar dargestellten Bildinhalt noch mit dem zugehörenden Ton unmittelbar in Verbindung stehen. Solche "zusätzliche Daten" können - ähnlich den bekannten Videotextdaten Zusatzinformationen - sein, die z. B. einen Programmguide (Fernsehzeitung), eine Kanalzuordnung der empfangenen Signale oder eine interaktive Kommunikation des Anwenders mit Servicediensten ermöglicht. Die "sonstigen Daten" können reine Daten oder auch ganze ausführbare Software sein, wobei letztere beim Aufruf Aktionen auslösen. Die "sonstigen Daten" können nach dem MHP-Standard oder in" ähnlicher Weise organisiert sein (näheres hierzu z. B. unter www.mhp.org und www.dvb.org).

Hier setzt die vorliegende Erfindung an.

Es ist Aufgabe der Erfindung, ein Verfahren und eine Schaltungsanordnung zum digitalen Fernsehempfang in mobilen Fernsehempfängern so zu gestalten, dass die Speicherung, Handhabung und Verarbeitung der neben den Audio- und Videosignalen empfangenen "sonstigen Daten" umfassend und flexibel, aber dennoch den schwierigen mobilen Empfangsverhältnissen angepasst gestaltet ist.

Diese Aufgabe wird schaltungstechnisch durch die Merkmale des Anspruchs 1 gelöst.

Gegenstand des Anspruchs 19 ist ein erfindungsgemäßes Verfahren zum Durchführen eines digitalen Fernsehempfangs.

Weiterbildungen sind Gegenstand der auf diese beiden Ansprüche zurückbezogenen Unteransprüche.

Erfindungsgemäß wird demnach ein Verfahren und eine Schaltungsanordnung beansprucht, bei dem eine digitale Fernsehempfangseinheit an ein verteiltes System, d. h. ein Netzwerk, angeschlossen ist. An dieses Netzwerk ist auch mindestens eine Bedieneinheit - auch MMI (man mashine interface) genannt - und mindestens ein Display angeschlossen. Auf dem Display und einem zugehörenden Audiowiedergabegerät sind das entsprechende Fernsehprogramm und die zugehörenden Tonsignale abrufbar. Über die Bedieneinheit kann der Benutzer das gewünschte Programm, aber auch zusätzliche Daten abrufen und auch noch näher zu erläuternde Eingaben machen. Wesentlich für die erfindungsgemäße Schaltungsanordnung und das erfindungsgemäße Verfahren ist, dass innerhalb der digitalen Fernsehempfangseinheit die im empfangenen digitalen Signal enthaltenen sonstigen Daten von den Video- und Audiosignalen abgetrennt und innerhalb der digitalen Fernsehempfangseinheit ausgewertet, ausgewählt, sortiert und gespeichert werden. Hierfür dient eine in der digitalen Fernsehempfangseinheit vorgesehene Speichereinrichtung, vorzugsweise ein Massenspeicher/ dessen Organisation und Verwaltung von einer ebenfalls in der digitalen Fernsehempfangseinheit angeordneten Steuereinrichtung durchgeführt wird.

Die Video- und Audiosignale werden dagegen nicht in dieser Speichereinrichtung gespeicherte sondern über die Bedieneinheit an das erwähnte Display und Audioeinrichtung des verteilten Systems weitergeleitet. Ein unmittelbares Weiterleiten der im Transportstream des empfangenden digitalen Fernsehsignals enthaltenen sonstigen Daten erfolgt bei dem erfindungsgemäßen Verfahren bzw. der erfindungsgemäßen Schaltungsanordnung nicht. Vielmehr wird die Organisation und Verwaltung dieser Daten ausschließlich innerhalb der digitalen Fernsehempfangseinheit durchgeführt. Ein gezieltes Abrufen einzelner Speicherinhalte der Speichereinrichtung ist jedoch auch möglich, indem über die Bedieneinheit des verteilten Systems ein entsprechender Befehl an die Steuereinheit der digitalen Fernsehempfangseinheit gegeben wird, welche wiederum die entsprechenden Informationen in der Speichereinrichtung abruft und diese vorzugsweise asynchron an das Netzwerk abgibt, damit diese am Display bzw. der Audioeinrichtung ausgegeben werden können.

Mit der erfindungsgemäßen Schaltungsanordnung und dem erfindungsgemäßen Verfahren sind eine Reihe von Vorteilen verbunden. Zum Einen kann die Speichereinrichtung als Massenspeicher ausgebildet sein und mit einer Vielzahl von Informationen, die aus den sonstigen Daten des Empfangs Signals gewonnen werden, gefüllt werden. Sofern mehrere DVB-T-Empfangsmodule innerhalb der digitalen Fernsehempfangseinrichtung vorgesehen sind, können die sonstigen Daten eines Programms das von einem Nutzer gerade nicht betrachtet wird, quasi im Hintergrund in den Speicher eingeschrieben werden, sofern ein zweites DVB-T-Empfangsmodul vorhanden ist und die gerade nicht vom Benutzer betrachteten Programme empfängt. Der Benutzer hat damit Zugriff auf einen vergrößerten Informationsinhalt der Speichereinrichtung im Vergleich zu solchen Lösungen, bei denen in die Speichereinrichtung ausschließlich solche sonstigen Daten eingeschrieben werden, die einem einzigen Programm zugeordnet sind.

Des Weiteren ist durch die Verlagerung der Speichereinrichtung in die digitale Fernsehempfangseinheit sichergestellt, dass auf dem Netzwerk lediglich solche sonstigen Daten übertragen werden müssen, die tatsächlich vom Benutzer angefordert werden. Eine reduzierte Belegung des Netzwerkes ist die Folge. Schließlich ist durch die begrenzte Übertragungsbandbreite eines verteilten Systems, das z. B. als MOST-Bus organisiert sein kann, ein schnellerer Zugriff von gewünschten Daten des Benutzers sichergestellt ist.

Die Erfindung ist besonders für die schwierigen und häufig wechselnden Empfangsverhältnisse bei mobilem Empfang, z. B. in einem Kraftfahrzeug, geeignet.

Die Erfindung wird anhand von Figuren im Zusammenhang mit einem Ausführungsbeispiel näher beschrieben und erläutert. Es zeigen:
- Fig. 1: ein Blockschaltbild einer erfindungsgemäßen Schaltungsanordnung mit einem Netzwerk, an das die erfindungsgemäße Anordnung gekoppelt ist, und
- Fig. 2: ein detaillierteres Blockschaltbild der erfindungsgemäßen Empfangseinrichtung zum Empfang von digitalen, terrestrisch empfangenen Fernsehsignalen.

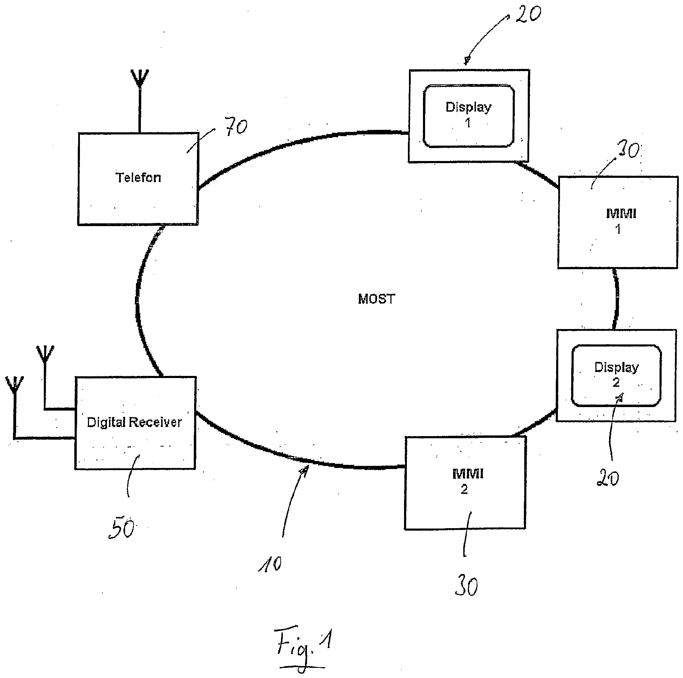

In Figur 1 ist ein Blockschaltbild einer erfindungsgemäßen Anordnung dargestellt. Die Anordnung weist als verteiltes System einen ringförmig aufgebauten, optischen Bus auf, der vorliegend als MOST (media oriented Systems transport)-Bus aufgebaut ist. An dieses Netzwerk 10 sind verschiedene Komponenten mit zugehörenden Interfaceeinrichtungen angeschlossen. Im vorliegenden Ausführungsbeispiel sind an das Netzwerk 10 eine digitale Fernsehempfangseinheit 50 mit einem oder mehreren DVB-T-Empfangsmodulen angeschlossen. Darüber hinaus sind an das Netzwerk 10 eine oder mehrere Bedieneinheiten 30, ein oder mehrere Displays 20 und auch eine drahtlose Telefonanlage 70 angeschlossen.

Das in Figur 1 dargestellte System ist beispielsweise in ein Kraftfahrzeug eingebaut und dazu geeignet, neben verschiedenen anderen Funktionen auch digitale Fernsehsignale zu empfangen. Eines der in Figur 1 dargestellten beiden Displays ist im vorderen Bereich des Fahrzeugs zwischen Fahrer und Beifahrer angeordnet, während das andere Display im Fondbereich des Fahrzeugs, also bei den hinteren Passagieren befestigt ist. Das Gleiche gilt für die in der Figur 1 dargestellten zwei Bedieneinheiten 30, von denen sich eine Bedieneinheit in Reichweite des Fahrers oder Beifahrers und die andere Bedieneinheit in Reichweite der auf den Rücksitzen befindlichen Fahrgäste befindet.

Über die Bedieneinheiten 30 kann der Benutzer auswählen welches Fernsehprogramm auf dem Display 20 und den in Figur 1 der Einfachheit halber nicht dargestellten Audioeinrichtungen dargestellt bzw. wiedergegeben werden soll.

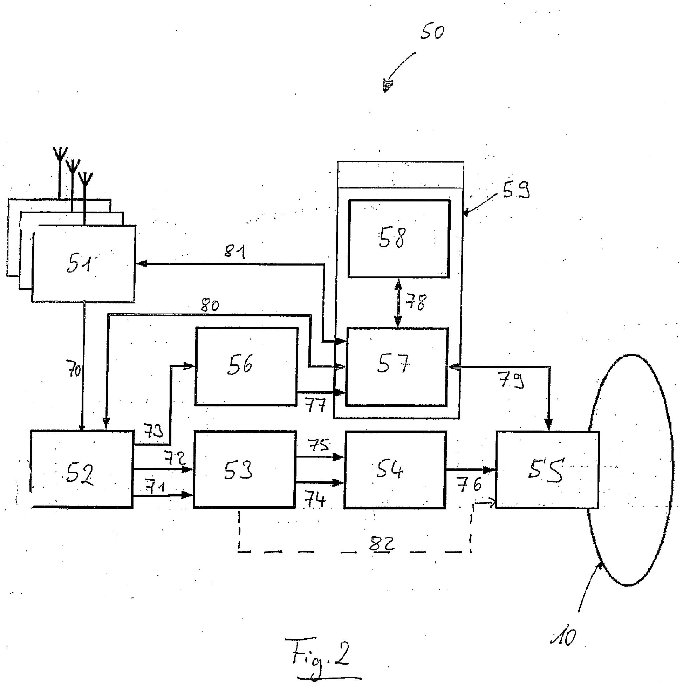

Über die Bedieneinheiten 30 kann der Benutzer jedoch auch zusätzliche Informationen aus dem digital empfangenen Fernsehsignal anfordern, die nicht unmittelbar zu dem eigentlichen Bildinhalt bzw. dem zugehörenden Tonsignal gehören. Beim digitalen Fernsehen werden nämlich neben den eigentlichen Video- und Audiosignalen auch sonstige Daten übertragen, auf die ein Benutzer gegebenenfalls zugreifen kann. Bei den sonstigen Daten kann es sich beispielsweise um die zwischenzeitlich bekannten EPG- (electronic programm guide)-Techniken handeln. Hierbei handelt es sich um eine Art elektronische Fernsehzeitung, die es dem Nutzer von digitalen Fernsehsignalen ermöglicht, über die augenblicklichen Programme, aber auch über Programmvorschauen und Programmkritiken etc. informiert zu werden. Neben diesem EPG-System ist es mittlerweile auch bekannt, Informationen gemäß dem MHP (Multimedia Home platt -form)-System abzurufen. Mit diesem System kann unter anderem auch eine interaktive Kommunikation zwischen dem Benutzer und Servereinrichtungen stattfinden. Damit der Nutzer über seine Bedieneinheit 30 möglichst viele Informationen, die über die sonstigen Daten, die dem empfangenden digitalen Fernsehsignal beigefügt sind, abrufen kann, weist die Schaltungsanordnung zum Empfang von digitalen Fernsehsignalen einen besonderen Aufbau auf, der im Zusammenhang mit der Figur 2 deutlich wird.

In Figur 2 ist die digitale Fernsehempfangseinheit 50 dargestellt. Die Fernsehempfangseinheit 50 weist eingangsseitig vorzugsweise mehrere DVB-T-Empfangsmodule 51 auf. Am Ausgang dieser Empfangsmodule 51 steht ein Multiplex -Transport -Datenstrom an, der über eine Datenleitung 70 an eine Demultiplexereinrichtung 52 geführt wird. Die Daten auf der Leitung 70 haben ein Format, das in PES (packeticed elementary stream)-Blöcke aufgeteilt ist. Am Ausgang dieser Demultiplexereinrichtung 52 stehen drei verschiedene Signale an: Ein Audio-Signal mit in PES-Blöcken organisierten Daten, welche auf der Leitung 71 einer Anpassstufe 53 zugeführt werden; Ein Video-Signal mit in PES-Blöcken organisierten Daten, die auf einer Leitung 72 der Anpassstufe 53 zugeführt werden; und ebenfalls in PES-Blöcken organisierten Daten, die weder Video- noch Audiosignale sind, sondern zusätzlich Informationen (z. B. EPG; MHP) beinhalten und auf einer Leitung 73 einer Auswerteeinrichtung 56 zugeführt werden. In dieser Auswerteeinrichtung 56 wird der Inhalt der sonstigen Daten, die auf der Leitung 73 anliegen, ausgewertet. Die Anpassstufe 53 ist nicht zwingenderweise notwendig, jedoch vorteilhaft um ein Transcoding, ein RE-Endcoding oder eine Datenratenwandlung der Audio- und/oder Videosignale durchzuführen. Diese gegebenenfalls umcodierten bzw. in ihrer Abtastrate gewandelten Video- und Audiosignale gelangen auf den Leitungen 74, 75 - weiterhin als PES-Blöcke - in eine Multiplexerein-richtung 54. Diese Multiplexereinrichtung 54 multiplext die beiden auf den Leitungen 74 und 75 anstehenden Audio- und Videosignale gegebenenfalls in einen einzelnen Datenstrom, der auf der Leitung 76 einem Netzwerkinterface 55, vorliegend einem MOST-Interface, zugeführt wird. Es ist jedoch auch möglich (siehe gestrichelte Leitung 82 in Fig. 2), dass in der Anpassstufe 53 das Audio- und/oder Videosignal in ein PCM-Signal umgewandelt bzw. transcodiert und direkt dem Netzwerkinterface 55 zugeführt wird. Von diesem MOST-Interface 55 gelangen die Audio- und Videosignale auf das Netzwerk 10 und schließlich zu den in Figur 1 dargestellten Displays 30. Die auf der Leitung 73 erhaltenen sonstigen Daten werden in einer Speichereinrichtung 58 nach vorgegebenen Kriterien gespeichert. Die vorgegebenen Kriterien für die Speicherung dieser sonstigen Daten in der Speichereinrichtung 58 sind in einer Steuereinrichtung 57 abgelegt, welche hierfür einerseits über eine Leitung 77 zum Empfang der sonstigen Daten mit der Auswerteschaltung 56 und über einen weiteren Leitungsbus 78 mit der Speichereinrichtung 58 in Verbindung steht. Die Steuereinrichtung 57 sorgt beispielsweise für ein Sortieren der Daten, eine Verwaltung der Daten innerhalb der Speichereinrichtung 58 und für erfolgreiche Sicherheits- sowie Plausibilitäts- und/oder Vollständigkeitsüberprüfungen. Die Steuereinrichtung 57, welche mit der Speichereinrichtung 58 eine Servereinheit 59 bildet, steht auch über einen bidirektionalen Leitungsbus 79 mit dem Interface 55, über den Leitungsbus 80 mit der Demultiplexereinrichtung 52 und über den Leitungsbus 81 mit den DVB-T-Empfangsmodulen 51 in Verbindung.

In der Praxis stellt sich die Betriebsweise dieser Anordnung folgendermaßen dar.

Der Benutzer wählt über die ihm zugeordnete Bedieneinrichtung 30 ein entsprechendes Fernsehprogramm, welches ihm auf dem Display 20 und einer zugehörenden Audioeinrichtung präsentiert wird. Der Befehl für die Programmauswahl gelangt über die Bedieneinheit 30 über das Netzwerk 10 an die digitale Fernsehempfangseinheit 50 und dort über das Interface 55 und den Leitungsbus 79 an die Steuereinrichtung 57. Diese Steuereinrichtung 57 sorgt dafür, dass mindestens eines der DVB-T-Empfangsmodule 51 aktiviert und das gewünschte Programm empfangen wird. Die zu diesem Programm zugehörenden Video- und Audiosignale gelangen über die erwähnten Stufen 52, 53, 54 und 55 an das Netzwerk 10. Die diesem Programm zugeordneten sonstigen Daten werden über die Leitung 73 und die Auswertestufe 56 in der Speichereinrichtung 58 organisiert abgelegt. Die Steuereinrichtung 57 sorgt nun dafür, dass möglichst sämtliche auf dem Kanal empfangenen sonstigen Daten, unabhängig davon, ob dieser der Benutzer abruft oder nicht, nacheinander organisiert in die Speichereinrichtung 58 eingeschrieben werden. Sofern sich die empfangenen sonstigen Daten zyklisch wiederholen sollten, kann die Steuereinrichtung 57 dafür sorgen, dass eine Überprüfung stattfindet, ob diese sonstigen Daten korrekt in der Speichereinrichtung 58 abgelegt wurden. Stellt die Steuereinrichtung 57 mittels bekannter Plausibilitätsprüfungen oder Vollständigkeitsüberprüfungen fest, dass Daten fehlen oder fehlerhaft in die Speichereinrichtung 58 eingeschrieben worden sind, werden entsprechend neue bzw. korrekte Daten in die Speichereinrichtung 58 eingeschrieben.

Zusätzlich kann die Steuereinrichtung 57 dafür sorgen, dass nicht nur die zum gerade empfangenen Programm gehörenden sonstigen Daten in die Speichereinrichtung 58 eingeschrieben werden, sondern auch solche sonstigen Daten, die anderen Programmen zugeordnet sind. Hierfür muss die Steuereinrichtung 57 die Demultiplexereinrichtung 52 dazu veranlassen, auf der Leitung 73 die sonstigen Daten anderer Programme bereitzustellen. Nach einer gewissen Zeitspanne führt dies dazu, dass die Speichereinrichtung 58 über eine Vielzahl an Informationen verfügt, die aus den sonstigen Daten sämtlicher zur Verfügung stehender Programme gebildet ist. Ein Benutzer hat damit die Möglichkeit, diese Daten individuell schnell abzurufen.

Darüber hinaus ist sichergestellt, dass ein Benutzer immer die korrekten Daten zur Verfügung hat. Wird beispielsweise in der Speichereinrichtung 58 eine augenblicklich gültige Programmtabelle abgespeichert, so kann beim mobilen Empfang, also bei einer Bewegung des Fahrzeugs mit schwierigen Empfangsverhältnissen laufend die Programmtabelle, die durch die sonstigen Daten übermittelt wird, überschrieben werden. Dem Nutzer steht dann immer eine aktualisierte, gültige Programmtabelle zur Verfügung.

Die erfindungsgemäße Schaltungsanordnung einer digitalen Fernsehempfangseinheit, welche an ein Netzwerk angeschlossen ist, sieht also eine Organisation der Speichereinrichtung 58 und Steuereinheit 57 als Server vor. Die in der Speichereinrichtung 58 abgelegten Daten können auch Programmdaten sein, die beim Aufruf eine bestimmte Software starten.

## Patentansprüche

1. Digitale Fernsehempfangseinheit (50) in einem mobilen digitalen Fernsehempfangssystem, in welchem die Fernsehempfangseinheit (50) mit mindestens einer Bedieneinheit (30) und mindestens einem Display (20) über ein Netzwerk (10) verbunden ist, umfassend:
eine Vielzahl von digitalen Fernsehempfangsmodulen (51) zum Empfang von mehreren Datenströmen, welche codierte und komprimierte digitale Fernsehsignale beinhalten,
eine Demultiplexereinrichtung (52) zum Separieren von Video- und Audiosignalen sowie sonstigen Daten aus den Datenströmen der empfangenen digitalen Fernsehsignale,
eine Auswerteeinrichtung (56) zum Auswerten des Inhalts der sonstigen Daten,
eine Anpassstufe (53) zum Empfangen der von der Demultiplexereinrichtung (52) separierten Video- und Audiosignale, zum Umwandeln der empfangenen Video- und Audiosignale in ein PCM-Signal und zum Zuführen des PCM-Signals direkt an ein Netzwerkinterface (55),
eine Speichereinrichtung (58) zum Speichern der sonstigen Daten nach vorgegebenen Kriterien, und
eine Steuereinrichtung (57) zum Sortieren und Verwalten der gespeicherten sonstigen Daten, wobei die Steuereinrichtung (57) mit wenigstens einem der Vielzahl von Fernsehempfangsmodulen (51) verbunden ist;
wobei das Netzwerkinterface (55) geeignet ist, das PCM-Signal in das Netzwerk (10) zu senden, und das Netzwerkinterface mit der Steuereinrichtung (57) verbunden ist, zum Empfangen von Anforderungssignalen zum Abrufen der gespeicherten sonstigen Daten.

2. Digitale Fernsehempfangseinheit nach Anspruch 1, wobei die sonstigen Daten Programmdaten sind, die sich auf andere Programme beziehen als ein gegenwärtig empfangenes Programm.

3. Digitale Fernsehempfangseinheit nach Anspruch 2, wobei ein Fernsehempfangsmodul (51) unter Steuerung der Steuereinrichtung (57) im Hintergrundbetrieb sonstige Daten verarbeitet, während ein anderes Fernsehempfangsmodul (51) die Video-und Audiosignale des gegenwärtig empfangenen Programms verarbeitet.

4. Digitale Fernsehempfangseinheit nach einem der Ansprüche 1 bis 3, wobei die Verbindung zwischen der Steuereinrichtung (57) und dem Netzwerkinterface (55) als ein bidirektionaler Leitungsbus ausgebildet ist, über den von einer beliebigen Bedieneinheit gesteuert gespeicherte Daten in das Netzwerk gezielt eingekoppelt werden können.

5. Digitale Fernsehempfangseinheit nach einem der Ansprüche 1 bis 4, wobei die Steuereinrichtung (57) und die Speichereinrichtung (58) als ein Server (59) ausgebildet sind, welche die sonstigen Daten den an das Netzwerk (10) angeschlossenen Displays (20) zur Verfügung stellt.

6. Digitale Fernsehempfangseinheit nach einem der Ansprüche 1 bis 5, wobei das Netzwerk ein ringförmiges MOST-Netzwerk eines Kraftfahrzeugs ist.

7. Mobiles digitales Fernsehempfangssystem in einem Kraftfahrzeug, welches aufweist:
ein Netzwerk (10), mindestens eine Bedieneinheit (30), mindestens ein Display (20), und mindestens eine digitale Fernsehempfangseinheit (50) nach einem der Ansprüche 1 bis 4 zum Empfang eines digitalen Empfangssignals, welches neben Video- und Audiosignalen auch sonstige Daten enthält,
wobei die Bedieneinheit (30), das Display (20) und die digitale Fernsehempfangseinheit (50) an das Netzwerk (10) angeschlossen sind,
die Speichereinrichtung (58) und die Steuereinrichtung (57) eine Servereinheit (59) bilden, die mindestens eine Bedieneinheit (30) und das mindestens eine Display (20) über das Netzwerk (10) an die. Servereinheit (59) gekoppelt sind,
die Steuereinrichtung (57) elektrisch an die Demultiplexereinrichtung (52) angeschlossen ist, und die sonstigen Daten von der Steuereinrichtung (57) aus der Speichereinrichtung (58) abrufbar an das Netzwerk (10) lieferbar sind, und
die sonstigen Daten über das Netzinterface (55) an das Netzwerk (10) koppelbar sind.

8. Mobiles digitales Fernsehempfangssystem nach Anspruch 7, **dadurch gekennzeichnet, dass** das Netzwerk (10) ein MOST- Netzwerk ist.

9. Mobiles digitales Fernsehempfangssystem nach einem der Ansprüche 7 oder 8, **dadurch gekennzeichnet, dass** die digitale Fernsehempfangseinheit (50) ferner eine Multiplexereinrichtung (54) zum Multiplexen der von der Demultiplexereinrichtung (52) separierten Audio- und Videosignale in einen Datenstrom aufweist, und dass dieser Datenstrom über das Netzwerkinterface (53) an das Netzwerk (10) koppelbar ist.

10. Mobiles digitales Fernsehempfangssystem nach einem der Ansprüche 7 bis 9, **dadurch gekennzeichnet, dass** die in der Speichereinrichtung (58) gespeicherten Daten ausschließlich bei Bedarf von der Steuereinrichtung (57) aus der Speichereinrichtung (58) abrufbar und an das Netzwerk (10) lieferbar sind.

11. Mobiles digitales Fernsehempfangssystem nach einem der Ansprüche 7 bis 10, **dadurch gekennzeichnet, dass** durch die Steuereinrichtung (57) der Inhalt und die Organisation der in der Speichereinrichtung (58) gespeicherten Daten beeinflussbar sind.

12. Mobiles digitales Fernsehempfangssystem nach Anspruch 11, **dadurch gekennzeichnet, dass** der Inhalt der Speichereinrichtung (58) nach in der Steuereinrichtung (57) vorgegebenen Kriterien bestimmt wird.

13. Mobiles digitales Fernsehempfangssystem nach einem der Ansprüche 7 bis 12, **dadurch gekennzeichnet, dass** durch die Steuereinrichtung (57) die in der Speichereinrichtung (58) gespeicherten Daten Plausibilitäts- und/oder Vollständigkeitsprüfungen unterzogen werden und bei Bedarf falsche Daten ersetzt und/oder fehlende Daten ergänzt werden.

14. Mobiles digitales Fernsehempfangssystem nach einem der Ansprüche 7 bis 13, **dadurch gekennzeichnet, dass** die Steuereinrichtung (57) über eine direkte Verbindung (80) an die Demultiplexereinrichtung (52) angeschlossen ist.

15. Mobiles digitales Fernsehempfangssystem nach einem der Ansprüche 7 bis 14, **dadurch gekennzeichnet, dass** die in die Speichereinrichtung (58) einzuschreibenden sonstigen Daten, Programmdaten eines gerade empfangenen Fernsehprogramms sind.

16. Mobiles digitales Fernsehempfangssystem nach einem der Ansprüche 7 bis 15, **dadurch gekennzeichnet, dass** die in die Speichereinrichtung (58) speicherbaren sonstigen Daten EPG, MHP-oder ähnliche Daten sind.

17. Mobiles digitales Fernsehempfangssystem nach Anspruch 14, **dadurch gekennzeichnet, dass** durch die Steuereinrichtung (57) die in der Speichereinrichtung (58) gespeicherten Daten Plausibilitäts- und oder Vollständigkeitsüberprüfungen unterzogen werden und bei Bedarf falsche Daten ersetzbar und/oder fehlende Daten ergänzbar sind, indem die Demultiplexereinrichtung (52) zum Bereitstellen entsprechender Daten veranlasst wird.

18. Mobiles digitales Fernsehempfangssystem nach einem der Ansprüche 7 bis 17, **dadurch gekennzeichnet, dass** an das Netzwerk (10) ein Funktelefon (70) gekoppelt ist.

19. Verfahren zum Empfang von digitalen Fernsehsignalen in einem mobilen digitalen Fernsehempfangssystem mit einer digitalen Fernsehempfangseinheit, die mit wenigstens einem Bedienteil und wenigstens einem Display über ein Netzwerk verbunden ist, umfassend die folgenden Schritte:
Empfangen einer Vielzahl von digitalen Datenströmen, welche codierte und komprimierte Fernsehsignale beinhalten;
Separieren von Audio- und Videosignalen sowie sonstigen Daten aus den empfangenen Datenströmen;
Umwandeln der separierten Audio- und Videosignale mittels einer Anpassstufe in ein PCM-Signal;
Zuführen des PCM-Signals direkt an ein Netzwerkinterface; Auswerten des Inhalts der sonstigen Daten;
Speichern der sonstigen Daten nach vorgegebenen Kriterien;
Sortieren und Verwalten der gespeicherten sonstigen Daten;
Senden der Audio- und Videosignale mithilfe des PCM-Signals von dem Netzwerkinterface, über das Netzwerk, an ein Display; und
Empfangen eines Anforderungssignals zum Abrufen von gespeicherten sonstigen Daten.

20. Verfahren nach Anspruch 19, **gekennzeichnet durch**:
Prüfen von gespeicherten sonstigen Daten auf Plausibilität und Vollständigkeit mit einer Steuereinrichtung, und
Senden von gespeicherten sonstigen Daten über das Netzwerk an ein mit dem Netzwerk verbundenes Display, als Antwort auf ein empfangenes Anforderungssignal.

21. Verfahren nach Anspruch 19 oder 20, wobei die Audio-und Videosignale in Echtzeit in das Netzwerk eingekoppelt werden, während das Auswerten, Speichern und das Abrufen der sonstigen Daten nicht in Echtzeit erfolgt.

## Claims

1. A digital television receiver unit (50) in a mobile digital television reception system in which the television receiver unit (50) is connected via a network (10) to at least one operating unit (30) and at least one display (20), said digital television receiver unit comprising:
a multiplicity of digital television receiver modules (51) configured to receive a plurality of data streams that contain encoded and compressed digital television signals, a demultiplexer (52) configured to separate video and audio signals and miscellaneous data from the data streams of the received digital television signals, an evaluation unit (56) configured to evaluate the content of the miscellaneous data, a matching stage (53) configured to receive the video and audio signals separated by the demultiplexer (52), to convert the received video and audio signals to a PCM signal, and to supply the PCM signal directly to a network interface (55), a memory (58) configured to store the miscellaneous data according to defined criteria, and a controller (57) configured to sort and manage the stored miscellaneous data,
wherein the controller (57) is connected to at least one of the multiplicity of television receiver modules (51); wherein the network interface (55) is suitable for transmitting the PCM signal into the network (10), and the network interface is connected to the controller (57) for the purpose of receiving signals requesting retrieval of the stored miscellaneous data.

2. The digital television receiver unit according to Claim 1, wherein the miscellaneous data are program data for programs other than a program currently being received.

3. The digital television receiver unit according to Claim 2, wherein one television receiver module (51) is controlled by the controller (57) to process miscellaneous data in a background operation while another television receiver module (51) processes the video and audio signals of the program currently being received.

4. The digital television receiver unit according to any one of Claims 1 to 3, wherein the connection between the controller (57) and the network interface (55) is configured as a bi-directional line bus via which stored data can be coupled selectively into the network, controlled by any operating unit.

5. The digital television receiver unit according to any one of Claims 1 to 4, wherein the controller (57) and the memory (58) are configured as a server (59) that makes the miscellaneous data available to the displays (20) connected to the network (10).

6. The digital television receiver unit according to any one of Claims 1 to 5, wherein the network is a ring-shaped MOST network in a motor vehicle.

7. A mobile digital television reception system in a motor vehicle, comprising:
a network (10), at least one operating unit (30), at least one display (20), and at least one digital television receiver unit (50) according to any one of Claims 1 to 4 configured to receive a digital reception signal that contains video and audio signals along with miscellaneous data,
wherein the operating unit (30), the display (20), and the digital television receiver unit (50) are connected to the network (10), the memory (58) and the controller (57) form a server unit (59), the at least one operating unit (30) and the at least one display (20) are coupled via the network (10) to the server unit (59), the controller (57) is electrically connected to the demultiplexer (52), and the miscellaneous data can be retrieved by the controller (57) from the memory (58) and supplied to the network (10), and the miscellaneous data can be coupled via the network interface (55) to the network (10).

8. The mobile digital television reception system according to Claim 7, **characterized in that** the network (10) is a MOST network.

9. The mobile digital television reception system according to either of Claims 7 and 8, **characterized in that** the digital television receiver unit (50) further comprises a multiplexer (54) configured to multiplex the audio and video signals separated by the demultiplexer (52) into one data stream, and **in that** said data stream can be coupled to the network (10) via the network interface (53) .

10. The mobile digital television reception system according to any one of Claims 7 to 9, **characterized in that** the data stored in the memory (58) can be retrieved from the memory (58) by the controller (57), solely as needed, and can be supplied to the network (10).

11. The mobile digital television reception system according to any one of Claims 7 to 10, **characterized in that** the controller (57) can influence the content and the organization of the data stored in the memory (58).

12. The mobile digital television reception system according to Claim 11, **characterized in that** the content of the memory (58) is determined according to criteria that are defined in the controller (57) .

13. The mobile digital television reception system according to any one of Claims 7 to 12, **characterized in that** the controller (57) tests the data stored in the memory (58) for plausibility and/or completeness, and where necessary, substitutes any erroneous data and/or supplements any missing data.

14. The mobile digital television reception system according to any one of Claims 7 to 13, **characterized in that** the controller (57) is connected via a direct connection (80) to the demultiplexer (52) .

15. The mobile digital television reception system according to any one of Claims 7 to 14, **characterized in that** the miscellaneous data to be written into the memory (58) are program data for a television program that has just been received.

16. The mobile digital television reception system according to any one of Claims 7 to 15, **characterized in that** the miscellaneous data that can be stored in the memory (58) are EPG data, MHP data, or similar data.

17. The mobile digital television reception system according to Claim 14, **characterized in that** the controller (57) tests data stored in the memory (58) for plausibility and/or completeness, and where necessary, can replace any erroneous data and/or supplement missing data by initiating the demultiplexer (52) to supply the appropriate data.

18. The mobile digital television reception system according to any one of Claims 7 to 17, **characterized in that** a mobile telephone (70) is coupled to the network (10).

19. A method for receiving digital television signals in a mobile digital television reception system that comprises a digital television receiver unit, which is connected via a network to at least one operating component and at least one display, said method comprising the following steps:
receiving a multiplicity of digital data streams that contain encoded and compressed television signals;
separating audio and video signals and miscellaneous data from the received data streams;
converting the separated audio and video signals to a PCM signal by means of a matching stage;
supplying the PCM signal directly to a network interface;
evaluating the content of the miscellaneous data;
storing the miscellaneous data according to defined criteria;
sorting and managing the stored miscellaneous data;
transmitting the audio and video signals with the aid of the PCM signal from the network interface via the network to a display; and
receiving a request signal to retrieve stored miscellaneous data.

20. The method according to Claim 19, **characterized by**:
testing stored miscellaneous data for plausibility and completeness by means of a controller, and
transmitting stored miscellaneous data via the network to a display connected to the network, in response to a received request signal.

21. The method according to Claim 19 or 20, wherein the audio and video signals are coupled in real time into the network, whereas the evaluation, storage, and retrieval of the miscellaneous data are not carried out in real time.

## Revendications

1. Unité de réception de signaux de télévision numérique (50) dans un système de réception de signaux de télévision numérique mobile, dans lequel l'unité de réception de signaux de télévision (50) est reliée à au moins une unité de commande (30) et à au moins un écran (20) par le biais d'un réseau (10), comprenant :
une pluralité de modules de réception de signaux de télévision numériques (51) pour la réception de plusieurs flux de données,
lesquels contiennent des signaux de télévision numériques comprimés et codés,
un dispositif démultiplexeur (52) pour la séparation de signaux vidéo et audio ainsi que d'autres données des flux de données des signaux de télévision numériques reçus,
une unité d'évaluation (56) pour l'évaluation du contenu des autres données,
un étage d'adaptation (53) pour la réception des signaux vidéo et audio séparés par le dispositif démultiplexeur (52), pour la conversion des signaux vidéo et audio reçus en un signal PCM et pour l'amenée du signal PCM directement à une interface de réseau (55),
une unité de mémoire (58) pour la mémorisation des autres données selon des critères prédéfinis, et
un dispositif de commande (57) pour le tri et la gestion des autres données mémorisées,
dans laquelle le dispositif de commande (57) est relié à au moins un de la pluralité de modules de réception de signaux de télévision (51) ;
dans laquelle l'interface de réseau (55) est adaptée pour envoyer le signal PCM dans le réseau (10), et l'interface de réseau est reliée au dispositif de commande (57) pour la réception de signaux de demande pour l'appel des autres données mémorisées.

2. Unité de réception de signaux de télévision numérique selon la revendication 1, dans laquelle les autres données sont des données de programme qui se rapportent à d'autres programmes qu'à un programme actuellement reçu.

3. Unité de réception de signaux de télévision numérique selon la revendication 2, dans laquelle un module de réception de signaux de télévision (51) traite d'autres données en arrière-plan sous la commande du dispositif de commande (57), pendant qu'un autre module de réception de signaux de télévision (51) traite les signaux vidéo et audio du programme actuellement reçu.

4. Unité de réception de signaux de télévision numérique selon l'une quelconque des revendications 1 à 3, dans laquelle la liaison entre le dispositif de commande (57) et l'interface de réseau (55) est réalisée en tant que bus de ligne bidirectionnel, par le biais duquel des données mémorisées de manière commandée par une unité de commande quelconque peuvent être injectées de manière ciblée dans le réseau.

5. Unité de réception de signaux de télévision numérique selon l'une quelconque des revendications 1 à 4, dans laquelle le dispositif de commande (57) et le dispositif de mémoire (58) sont réalisés en tant que serveur (59), lequel met les autres données à disposition des écrans (20) raccordés au réseau (10).

6. Unité de réception de signaux de télévision numérique selon l'une quelconque des revendications 1 à 5, dans laquelle le réseau est un réseau MOST annulaire d'un véhicule automobile.

7. Système de réception de signaux de télévision numérique mobile dans un véhicule automobile, lequel présente :
un réseau (10), au moins une unité de commande (30), au moins un écran (20), et au moins une unité de réception de signaux de télévision numérique (50) selon l'une quelconque des revendications 1 à 4 pour la réception d'un signal de réception numérique, lequel contient en plus de signaux vidéo et audio également d'autres données,
dans lequel l'unité de commande (30), l'écran (20) et l'unité de réception de signaux de télévision numérique (50) sont raccordés au réseau (10),
l'unité de mémoire (58) et le dispositif de commande (57) forment une unité de serveur (59), l'au moins une unité de commande (30) et l'au moins un écran (20) sont couplés à l'unité de serveur (59) par le biais du réseau (10),
le dispositif de commande (57) est raccordé électriquement au dispositif démultiplexeur (52), et les autres données du dispositif de commande (57) appelables du dispositif de mémoire (58) sont livrables au réseau (10), et
les autres données peuvent être couplées au réseau (10) par le biais de l'interface de réseau (55).

8. Système de réception de signaux de télévision numérique mobile selon la revendication 7, **caractérisé en ce que** le réseau (10) est un réseau MOST.

9. Système de réception de signaux de télévision numérique mobile selon l'une quelconque des revendications 7 ou 8, **caractérisé en ce que** l'unité de réception de signaux de télévision numérique (50) présente en outre un dispositif multiplexeur (54) pour le multiplexage des signaux audio et vidéo séparés par le dispositif démultiplexeur (52) en un flux de données, et que ce flux de données peut être couplé au réseau (10) par le biais de l'interface de réseau (53).

10. Système de réception de signaux de télévision numérique mobile selon l'une quelconque des revendications 7 à 9, **caractérisé en ce que** les données mémorisées dans le dispositif de mémoire (58) sont appelables du dispositif de mémoire (58) exclusivement en cas de besoin du dispositif de commande (57) et livrables au réseau (10).

11. Système de réception de signaux de télévision numérique mobile selon l'une quelconque des revendications 7 à 10, **caractérisé en ce que** le contenu et l'organisation des données mémorisées dans le dispositif de mémoire (58) peuvent être influencés par le dispositif de commande (57).

12. Système de réception de signaux de télévision numérique mobile selon la revendication 11, **caractérisé en ce que** le contenu du dispositif de mémoire (58) est déterminé selon des critères prédéfinis dans le dispositif de commande (57).

13. Système de réception de signaux de télévision numérique mobile selon l'une quelconque des revendications 7 à 12, **caractérisé en ce que** des données mémorisées dans le dispositif de mémoire (58) sont soumises à des examens de plausibilité et/ou d'exhaustivité par le dispositif de commande (57) et en cas de besoin les données erronées sont remplacées et/ou les données manquantes sont complétées.

14. Système de réception de signaux de télévision numérique mobile selon l'une quelconque des revendications 7 à 13, **caractérisé en ce que** le dispositif de commande (57) est raccordé au dispositif démultiplexeur (52) par le biais d'une liaison directe (80).

15. Système de réception de signaux de télévision numérique mobile selon l'une quelconque des revendications 7 à 14, **caractérisé en ce que** les autres données à inscrire dans le dispositif de mémoire (58) sont des données de programme d'un programme de télévision actuellement reçu.

16. Système de réception de signaux de télévision numérique mobile selon l'une quelconque des revendications 7 à 15, **caractérisé en ce que** les autres données mémorisables dans le dispositif de mémoire (58) sont des données EPG, MHP ou similaires.

17. Système de réception de signaux de télévision numérique mobile selon la revendication 14, caractérisé ce que les données mémorisées dans le dispositif de mémoire (58) sont soumises à des examens de plausibilité et ou d'exhaustivité par le dispositif de commande (57) et en cas de besoin les données erronées peuvent être remplacées et/ou les données manquantes peuvent être complétées, par le fait que le dispositif démultiplexeur (52) est amené à mettre à disposition des données correspondantes.

18. Système de réception de signaux de télévision numérique mobile selon l'une quelconque des revendications 7 à 17, **caractérisé en ce qu'**un téléphone radio (70) est couplé au réseau (10).

19. Procédé de réception de signaux de télévision numériques dans un système de réception de signaux de télévision numérique mobile avec une unité de réception de signaux de télévision numérique, qui est reliée à au moins un élément de commande et à au moins un écran par le biais d'un réseau, comprenant les étapes suivantes :
réception d'une pluralité de flux de données numériques, lesquels contiennent des signaux de télévision comprimés et codés ;
séparation de signaux audio et vidéo ainsi que d'autres données des flux de données reçus ;
conversion des signaux audio et vidéo séparés au moyen d'un étage d'adaptation en un signal PCM ;
amenée du signal PCM directement à une interface de réseau ;
évaluation du contenu des autres données ;
mémorisation des autres données selon des critères prédéfinis ;
tri et gestion des autres données mémorisées ;
envoi des signaux audio et vidéo à l'aide du signal PCM de l'interface de réseau à un écran par le biais du réseau ; et
réception d'un signal de demande pour l'appel d'autres données mémorisées.

20. Procédé selon la revendication 19, **caractérisé par** :
l'examen de plausibilité et d'exhaustivité d'autres données mémorisées avec un dispositif de commande, et
l'envoi d'autres données mémorisées à un écran associé au réseau par le biais du réseau, en tant que réponse à un signal de demande reçu.

21. Procédé selon la revendication 19 ou 20, dans lequel les signaux audio et vidéo sont injectés en temps réel dans le réseau, tandis que l'évaluation, la mémorisation et l'appel des autres données n'a pas lieu en temps réel.
